# EUROPEAN PATENT SPECIFICATION

(11) **EP 3 061 629 B1**
(45) Date of publication and mention of the grant of the patent: **02.01.2019**
(21) Application number: 15860039.5
(22) Date of filing: 24.11.2015
(51) Int. Cl.: B60C 11/00, B60C 1/00, C08K 3/04, C08K 3/36, C08L 15/00, B60C 9/08, C08L 9/06, C08L 93/00, C08L 57/02

(54) **TIRE**
REIFEN
PNEU

(30) Priority: 12.12.2014 JP 2014252458
(43) Date of publication of application: 31.08.2016
(73) Proprietor: Bridgestone Corporation, Tokyo 104-8340 (JP)
(72) Inventor: KAWAMATA, Takahiro, Tokyo 104-8340 (JP)
(74) Representative: Oxley, Robin John George
(86) International application number: PCT/JP2015/005841
(87) International publication number: WO 2016/092755

(56) References cited:
- EP-A1- 2 662 405
- EP-A2- 2 615 127
- WO-A1-2014/129665
- JP-A- H05 131 811
- JP-A- 2004 018 740
- JP-A- 2013 166 865
- JP-A- 2014 133 439
- DATABASE WPI Week 201143 Thomson Scientific, London, GB; AN 2011-H03589 XP002762718, & JP 2011 122090 A (SUMITOMO RUBBER IND LTD) 23 June 2011 (2011-06-23)
- DATABASE WPI Week 201472 Thomson Scientific, London, GB; AN 2014-T77027 XP002762719, & JP 2014 205842 A (BRIDGESTONE CORP) 30 October 2014 (2014-10-30)

## Description

### TECHNICAL FIELD

The present invention relates to a tire, and in particular a tire having a tread made of a rubber composition containing a modified conjugated diene-based polymer.

### BACKGROUND ART

A tire for a motorcycle is required to exhibit good gripping performance on a dry road surface and a wet road surface, respectively, because the equatorial plane of the tire tends to be inclined with respect to a road surface at a relatively large inclination angle in a cornering situation of a vehicle. Further, a tire for a motorcycle must have high wear resistance because the tire is subjected to relatively large load per unit area of a tread surface thereof.
There has conventionally been made attempts to control gripping performance and wear resistance of such a tire for a motorcycle as described above by setting specific formulations of a rubber composition thereof.
For example, there has been proposed use of styrene-butadiene rubber (SBR) having a high styrene content in a rubber composition in order to improve gripping performance and use of silica in a rubber composition in order to retain good gripping performance on a wet road surface. Further, there has been proposed a technique of blending a polyfunctional conjugated diene-based polymer having a specific amino substituent group or the like with high-grade carbon black as a filler to obtain a rubber composition having a low content of a polycyclic aromatic compound, thereby controlling wear resistance and hysteresis loss of a resulting tire (e.g. PTL 1).
PTL2 discloses a rubber composition for a tire tread, the rubber composition comprising a modified natural rubber, carbon black and silica. The total content of carbon black and silica may be 40 to 120 parts by mass, per 100 parts by mass of the rubber component. The composition may further comprise 5 parts by mass of a C5 petroleum resin having a softening point lower than 120 °C, per 100 parts by mass of the rubber component. PTL3 discloses a rubber composition for a tire, the composition comprising a modified conjugated diene polymer and silica. The silica content may be 50 parts by mass or more and/or 120 parts by mass or less. The rubber composition may further comprise a coal- or petroleum-based resin having a softening point of 140 °C or less. The content of the resin may be 10 parts by mass.
Attention is also drawn to the disclosures of JP 2014-205842 A, EP 2662405 A1, WO 2014/129665 A1, JP 2014-133439 A, JP 2013-166865 A and JP 2004-018740 A.

### CITATION LIST

### Patent Literature

PTL 1: WO 2004/087802
PTL 2: EP 2615127
PTL 3: JP 2011 122090

### SUMMARY

However, an attempt to control gripping performance and wear resistance of a tire by only changing a rubber composition thereof tends to result in a rubber composition in which one of gripping performance and wear resistance has improved but the other remains unsatisfactory. That is, it turned out that achieving good gripping performance and high wear resistance of a tire in a compatible manner cannot be done only by controlling a formulation of a rubber composition thereof.

In view of this, an object of the present disclosure is to provide a tire capable of exhibiting good gripping performance and high wear resistance of a tread thereof in a highly compatible manner.

Our tire characteristically has a tread, wherein:
provided that the center position in the tire width direction of a tread surface is the center position A, a position distanced from the center position A on each side in the tire width direction along a periphery of the tread surface by 1/4 of the entire peripheral length of the tread surface is position B, a length of a straight line l_{A} drawn from the center position A to be normal to the tire rotation axis P is L_{A}, a length of a straight line drawn from the position B to be normal to the tire rotation axis P is L_{B}, an intersection of the straight line l_{A} and a straight line drawn from the position B to be normal to the straight line l_{A} is position C, and a length between the position B and the position C is X, (L_{A}-L_{B})/X is in the range of 0.325 to 0.350; and
the tread is obtained by using a rubber composition containing 40-140 parts by mass of a filler including silica and 5-40 parts by mass of a low softening point resin having softening point not higher than 145 °C with respect to 100 parts by mass of a rubber component including a modified conjugated diene-based polymer.
Our tire can achieve good gripping performance and high wear resistance of a tread thereof in a highly compatible manner.

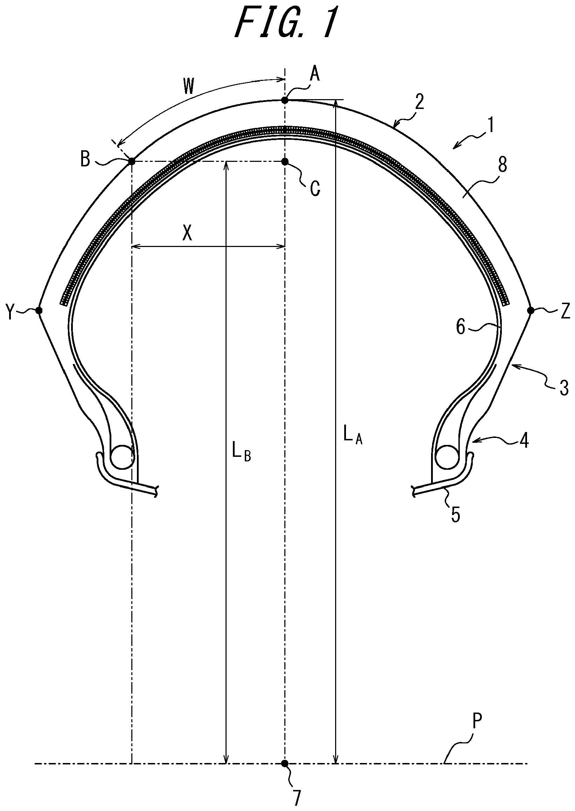

The "entire peripheral length" of a tread surface represents a peripheral length between end points of the entire tread width in the present specification, which corresponds to a length measured along a tread surface from Y to Z in FIG. 1. "End points" of the entire tread width represent in the present specification end points of the entire tread width as disclosed in JATMA YEAR BOOK of JATMA (The Japan Automobile Tyre Manufacturers Association, Inc.) in Japan, STANDARDS MANUAL of ETRTO (The European Tyre and Rim Technical Organisation) in Europe, and YEAR BOOK of TRA (THE TIRE AND RIM ASSOCIATION INC.) in the United States.
A "prescribed rim" represents a standard rim prescribed for each tire size by an industrial standard which is valid in an area where the tire is manufactured and used, and examples of the industrial standard include JATMA YEAR BOOK of JATMA (The Japan Automobile Tyre Manufacturers Association, Inc.) in Japan, STANDARDS MANUAL of ETRTO (The European Tyre and Rim Technical Organisation) in Europe, and YEAR BOOK of TRA (THE TIRE AND RIM ASSOCIATION INC.) in the United States. Specifically, a prescribed rim represents "Measuring Rim" in STANDARDS MANUAL of ETRTO and "Design Rim" in YEAR BOOK of TRA. The "normal internal pressure" represents the internal air pressure corresponding to the maximum loading capacity for each tire size and ply rating prescribed by YEAR BOOK of JATMA and the like. "The maximum loading capacity" represents the maximum mass which is permitted to be loaded on a tire, prescribed for the tire by these industrial standards such as JATMA.
A "conjugated diene-based polymer" represents a homopolymer of a conjugated diene compound or a copolymer of a conjugated diene compound and a non-conjugated olefin compound in the present specification or disclosure.
A "softening point" represents temperature at which a cured substance, subjected to reheating, exhibits a rapid drop of elastic modulus. Specifically, a" softening point" presents a softening point measured by a test method for softening point ("6.4 Softening point test method (Ring and ball method)") described in JIS K 2207 in the present specification.

(L_{A}-L_{B})/X described above is preferably in the range of 0.300 to 0.350 in our tire. The tire can achieve good gripping performance and high wear resistance of a tread thereof in a more highly compatible manner by this structure.

A silica content ratio in the filler is preferably in the range of 20-95 mass % in our tire. The tire can achieve good gripping performance and high wear resistance of a tread thereof in a highly compatible manner and in particular improve wet gripping performance thereof by this structure.

The silica content ratio in the filler is more preferably in the range of 20-50 mass % (inclusive of 20 mass % and exclusive of 50 mass %) in our tire. The tire can achieve good gripping performance and high wear resistance of a tread thereof in a highly compatible manner and in particular keep a good balance between gripping performance and a wet road surface and gripping performance on a dry road surface thereof by this structure.

It is preferable that the filler contains carbon black and a carbon black content ratio in the filler is in the range of 50-80 mass % (inclusive of 50 mass % and 80 mass %) in our tire. The tire can achieve good gripping performance and high wear resistance of a tread thereof in a highly compatible manner and in particular improve wear resistance thereof by this structure.

It is preferable that a modified functional group of the modified conjugated diene-based polymer includes at least one type of atom selected from the group consisting of nitrogen atom, silicon atom and oxygen atom. This structure strengthens an interaction between the modified conjugated diene-based polymer and carbon black and/or silica, thereby imparting the tire with high wear resistance, high reinforcing properties, and high elastic modulus.

Our tire is preferably a tire for a motorcycle because the structure of our tire can be easily applied to a tire for a motorcycle.

According to our tire, it is possible to provide a tire capable of exhibiting good gripping performance and high wear resistance of a tread thereof in a highly compatible manner.

### BRIEF DESCRIPTION OF THE DRAWINGS

In the accompanying drawings, wherein:
FIG. 1 is a sectional view in the tire width direction of a tire according to one embodiment of our tire in a state where the tire has been assembled with a prescribed rim and inflated at the normal internal pressure with no load exerted thereon.

### DETAILED DESCRIPTION

An embodiment for implementing our tire will be demonstratively described hereinafter.

### (Tire)

In our tire, provided that the center position in the tire width direction of a tread surface is the center position A, a position distanced from the center position A on each side in the tire width direction along a periphery of the tread surface by 1/4 of the entire peripheral length of the tread surface is position B, a length of a straight line l_{A} drawn from the center position A to be normal to the tire rotation axis P is L_{A}, a length of a straight line drawn from the position B to be normal to the tire rotation axis P is L_{B}, an intersection of the straight line l_{A} and a straight line drawn from the position B to be normal to the straight line l_{A} is position C, and a length between the position B and the position C is X, (L_{A}-L_{B})/X is in the range of 0.277 to 0.350.

Further, our tire has a tread obtained by using a rubber composition containing 40-140 parts by mass of a filler including silica and 5-40 parts by mass of a low softening point resin having softening point not higher than 145 °C with respect to 100 parts by mass of a rubber component including a modified conjugated diene-based polymer.

Our tire can achieve good gripping performance and high wear resistance of the tread thereof in a highly compatible manner.

Type of the tire is not particularly restricted and may be appropriately selected according to the object. Examples of the tire include a front tire for a motorcycle, a rear tire for a motorcycle, a front tire for a four-wheeled vehicle, a rear tire for a four-wheeled vehicle, and the like.

A front tire for a motorcycle is preferable among these examples in terms of allowing easy application of the structure of our tire thereto.

Type of the motorcycle is not particularly restricted and may be appropriately selected according to the object. Examples of the motorcycle include a racing motorcycle, an on-highway motorcycle, an on-road motorcycle, an off-road motorcycle, and the like.

### < Tire structure >

A tire according to one embodiment of our tire will be described with reference to a drawing hereinafter.

FIG. 1 is a sectional view in the tire width direction of the tire according to the one embodiment of our tire in a state where the tire has been assembled with a prescribed rim and inflated at the normal internal pressure with no load exerted thereon.

The tire 1 exemplarily shown in the drawing has a pair of bead portions 4, a pair of sidewall portions 3 respectively continuous with the bead portions 4, and a tread portion 2 and a carcass 6 extending in a toroidal shape across the respective sidewall portions 3. The tire 1 is assembled with a rim 5 and inflated at the normal internal pressure.

FIG. 1 shows the rotation center 7 of the tire, the tire rotation axis P as a line in parallel to the tire width direction and passing through the rotation center 7 of the tire, the center position A in the tire width direction of a tread surface, a position B distanced from the center position A on each side in the tire width direction along a periphery of the tread surface by 1/4 of the entire peripheral length of the tread surface, and a position C as an intersection of a straight line linking the center position A and the rotation center 7 of the tire to be normal to the tire rotation axis P (which straight line will be referred to "l_{A}") and a straight line drawn from the position B to be normal to the straight line l_{A}.

Provided that a length of the straight line (l_{A}) drawn from the center position A to the tire rotation axis P to be normal to the rotation axis P is L_{A}, a length of the straight line drawn from the position B to the tire rotation axis P to be normal to the tire rotation axis P is L_{B}, and a length between the position B and the position C is X, a configuration of our tire can be specified by a parameter value calculated by (L_{A}-L_{B})/X.

### <<(L_{A}-L_{B})/X>>

Our tire is a tire having a tire configuration satisfying a requirement that (L_{A}-L_{B})/X is in the range of 0.277 to 0.350.

The parameter value (L_{A}-L_{B})/X is not particularly limited and may be appropriately selected according to the object as long as it remains within the range of 0.277 to 0.350. The parameter value (L_{A}-L_{B})/X, however, is preferably in the range of 0.300 to 0.350 and more preferably in the range of 0.325 to 0.350.

(L_{A}-L_{B})/X ≥ 0.277 improves handling properties of the tire and (L_{A}-L_{B})/X ≤0.350 increases a ground contact area of the tread relative to a road surface, thereby improving gripping performance of tread rubber. The parameter value (L_{A}-L_{B})/X in the preferable range or the more preferable range is advantageous because then a balance between the handling properties of the tire and the gripping performance of the tread rubber can be kept in the optimum manner.

### << 1/4 of the entire peripheral length of the tread surface >>

In the present specification, "the entire peripheral length" represents a length measured in the tire width direction from one tread end to the other tread end along a tread surface in a state where the tire has been assembled with a prescribed rim and inflated at the normal internal pressure with no load exerted thereon. "1/4 of the entire peripheral length" represents a length corresponding to 1/4 of the entire peripheral length of the tread surface.

A radial distance between a tread surface position and the rotation center changes as the tread surface position shifts from the center position in the tire width direction toward the outer side in the tire width direction in a tire for a motor cycle. The larger such a change is, the larger slip ratio will result at a position on the outer side in the tire width direction of the center position, thereby facilitating wear of tread rubber therein. For example, in a case of a front tire, it has been revealed from the tire applications in the past that the tire is particularly worn at a position distanced from the tread surface center position on each side in the tire width direction along a periphery of a tread surface by 1/4 of the entire peripheral length of the tread surface. On the other hand, it is assumed, in tires having the same configurations, that those having tread rubber with the higher gripping capacity will experience the less wear of the tread rubber because of the lower slip ratio therein.
On this basis, our tire has been contrived by specifying a formulation of a rubber composition, as well as (L_{A}-L_{B})/X calculated from information at a position distanced from the tread surface center position on each side in the tire width direction along a periphery of a tread surface by 1/4 of the entire peripheral length of the tread surface.

Our tire has a tread obtained by using a rubber composition containing at least a rubber component, a filler, and a low softening point resin.

### < Rubber component >

The rubber component contains at least a modified conjugated diene-based polymer and optionally other rubbers.

### << Modified conjugated diene-based polymer >>

The modified conjugated diene-based polymer is a conjugated diene-based polymer having a modified functional group.

A content of the modified conjugated diene-based polymer in the rubber component is not particularly restricted and may be appropriately selected according to the object of an application. The content of the modified conjugated diene-based polymer is, however, preferably in the range of 10-40 mass % and more preferably in the range of 15-30 mass %.

The content of the modified conjugated diene-based polymer in the rubber component ≥ 10 mass % ensures satisfactorily high wear resistance of the tire and the same content ≤ 40 mass % suppresses deterioration of gripping performance on a wet road surface and a dry road surface, respectively. The content of the modified conjugated diene-based polymer in the rubber component within the aforementioned preferable ranges is advantageous in terms of keeping a good balance between gripping performance and high wear resistance of the tire.

### - Conjugated diene-based polymer -

A "conjugated diene-based polymer" represents a homopolymer of a conjugated diene compound or a copolymer of a conjugated diene compound and a non-conjugated olefin compound in the present specification.

### -- Conjugated diene compound --

Type of the monomer of the conjugated diene compound described above is not particularly restricted and may be appropriately selected according to the object of an application. Examples of the monomer include: non-cyclic monomers such as 1,3-butadiene, isoprene, 1,3-pentadiene, 2,3-dimethyl-1,3-butadiene, and 1,3-hexadiene; aromatic vinyl monomers such as styrene, α-methylstyrene, p-methylstyrene, vinyltoluene, vinylnaphthalene; and the like. These monomers may be used either by one type solely or in combination of two or more types.

### -- Non-conjugated olefin compound --

Type of the non-conjugated olefin compound is not particularly restricted and may be appropriately selected according to the object of an application. Examples of the non-conjugated olefin compound include ethylene, propylene, 1-butene, 1-pentene, 1-hexene, 1-heptene, 1-octene, and the like. These olefin compounds may be used either by one type solely or in combination of two or more types.

A modified polybutadiene is preferable among the examples of the modified conjugated diene-based polymer, in terms of exhibiting high wear resistance.

### - Modified functional group -

Type of the modified functional group is not particularly restricted and may be appropriately selected according to the object of an application. Examples of the modified functional group include a modified functional group including nitrogen atom, a modified functional group including silicon atom, a modified functional group including oxygen atom, a modified functional group including tin atom, and the like. These modified functional groups may be used either by one type solely or in combination of two or more types.

A modified functional group including nitrogen atom, a modified functional group including silicon atom, and a modified functional group including oxygen atom are preferable among the examples because these three strengthen an interaction between the conjugated diene-based polymer and carbon black and/or silica, thereby successfully imparting the tire with satisfactory wear resistance, reinforcing properties and elastic modulus.

Type of a method for introducing the modified functional group to the conjugated diene-based polymer is not particularly restricted and may be appropriately selected according to the object of an application. Examples of the method include a method of using a polymerization initiator having a functional group, a method of copolymerizing a monomer having a functional group with other compounds, a method of reacting a polymerization terminal of the conjugated diene-based polymer with a modifying agent, and the like. These methods may be employed either by one type solely or in combination of two or more types.

### -- Modified functional group containing nitrogen atom --

Type of the modified functional group containing nitrogen atom is not particularly restricted and may be appropriately selected according to the object of an application. Examples of the modified functional group containing nitrogen atom include a substituted amino group represented by general formula (I) and cyclic amino group represented by general formula (II) shown below.

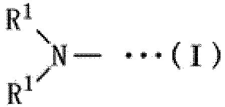

(In general formula (I), R¹ is alkyl, cycloalkyl, or aralkyl group having 1 to 12 carbon atoms. Methyl, ethyl, butyl, octyl, or isobutyl group is preferable as the alkyl group. Cyclohexyl group is preferable as the cycloalkyl group. 3-phenyl-1-propyl group is preferable as the aralkyl group. Respective R¹s may be of the same type or different types.)

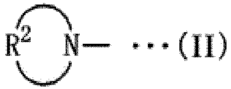

(In general formula (II), R² is alkylene, substituted alkylene, oxyalkylene, or N-alkylamino-alkylene group having 3 to 16 methylene groups. The substituted alkylene group contains an alkylene group having one to eight substituents. Examples of the substituent include normal/branched alkyl, cycloalkyl, bicycloalkyl, aryl, or aralkyl group having 1 to 12 carbon atoms. Trimethylene, tetramethylene, hexamethylene, and dodecamethylene groups are preferable as the alkylene group. Hexadecamethylene group is preferable as the substituted alkylene group. Oxydiethylene group is preferable as the oxyalkylene group. N-alkylazadiethylene is preferable as the N-alkylamino-alkylene group.)

Type of the cyclic amino group represented by general formula (II) is not particularly restricted and may be appropriately selected according to the object of an application. Examples of the cyclic amino group include 2-(2-ethylhexyl)pyrrolidine, 3-(2-propyl)pyrrolidine, 3,5-bis(2-ethylhexyl)piperidine, 4-phenylpiperidine, 7-decyl-1-azacyclotridecane, 3,3-dimethyl-1-azacyclotetradecane, 4-dodecyl-1-azacyclooctane, 4-(2-phenylbutyl)-1-azacyclooctane, 3-ethyl-5-cyclohexyl-1-azacycloheptane, 4-hexyl-1-azacycloheptane, 9-isoamyl-1-azacycloheptadecane, 2-methyl-1-azacycloheptadece-9-ene, 3-isobutyl-1-azacyclododecane, 2-methyl-7-t-butyl-1-azacyclododecane, 5-nonyl-1-azacyclododecane, 8-(4'-methylphenyl)-5-pentyl-3-azabicyclo[5.4.0]undecane, 1-butyl-6-azabicyclo[3.2.1]octane, 8-ethyl-3-azabicyclo[3.2.1]octane, 1-propyl-3-azabicyclo[3.2.2]nonane, 3-(t-butyl)-7-azabicyclo[4.3.0]nonane, 1,5,5-trimethyl-3-azabicyclo[4.4.0]decane, and the like. These cyclic amino groups may be used either by one type solely or in combination of two or more types.

### -- Modified functional group including silicon atom --

Type of the modified functional group including silicon atom is not particularly restricted and may be appropriately selected according to the object of an application. Examples of the modified functional group including silicon atom include a modified functional group having silicon-carbon bond, represented by general formula (III) shown below and formed by using a coupling agent.

Chemically bonding the conjugated diene-based polymer with silicon by way of the silicon-carbon bond is preferable because it enhances affinity between a rubber composition and a filler, thereby imparting the rubber composition with satisfactorily high wear resistance and good reinforcing properties.

Silicon, when it is simply mixed into a rubber composition, generally does not make so much contribution to reinforcing the rubber composition because of low affinity thereof with polymers in the rubber composition. However, it is possible to enhance affinity between a rubber composition and silicon as a filler, to impart the rubber composition with satisfactorily high wear resistance and good reinforcing properties, by chemically bonding the conjugated diene-based polymer with silicon by way of the silicon-carbon bond.

(R³)ₐZ(R⁴)_{b} (III)

(In general formula (III), Z represents silicon; R³s are each independently selected from the group consisting of C₁₋₂₀ alkyl group, C₃₋₂₀ cycloalkyl group, C₆₋₂₀ aryl group, and C₇₋₂₀ aralkyl group; R⁴s each independently represent chlorine or bromine; a is an integer in the range of 0 to 3; b is an integer in the range of 1 to 4; a + b = 4; methyl, ethyl, n-butyl, n-octyl, and 2-ethylhexyl groups are preferable as the alkyl group; cyclohexyl group is preferable as the cycloalkyl group; phenyl group is preferable as the aryl group; neophyl group is preferable as the aralkyl group; respective R³s may be of the same type or different types; and respective R⁴s may be of the same type or different types.)

Type of the coupling agent using silicon is not particularly restricted and may be appropriately selected according to the object of an application. Examples of the coupling agent include a hydrocarbyloxysilane compound, SiCl₄ (silicon tetrachloride), (R³)SiCl₃, (R³)₂SiCl₂, (R³)₃SiCl, and the like.
A hydrocarbyloxysilane compound is preferable among the examples, in terms of having high affinity with silica.

### -- Hydrocarbyloxysilane compound --

Type of the hydrocarbyloxysilane compound is not particularly restricted and may be appropriately selected according to the object of an application and examples thereof include a hydrocarbyloxysilane compound represented by general formula (IV) shown below.

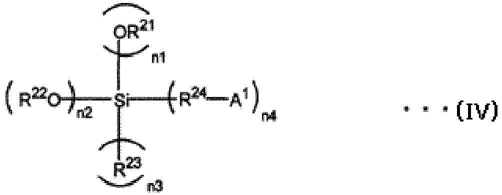

(In general formula (IV), n1 + n2 + n3 + n4 = 4 (wherein n2 is an integer in the range of 1 to 4 and n1, n3 and n4 are each an integer in the range of 0 to 3); A¹ is at least one type of functional group selected from the group consisting of saturated cyclic tertiary amine compound residue, unsaturated cyclic tertiary amine compound residue, ketimine residue, nitrile, (thio)isocyanato (*"(thio)isocyanato" represents isocyanate group or thioisocyanate group hereinafter and a similar principle applies to other "(thio)" cases, as well), (thio)epoxy, trihydrocarbyl isocyanurate ester, dihydrocarbyl carbonate ester, nitrile, pyridine, (thio)ketone, (thio)aldehyde, amide, (thio)carboxylate ester, metal salt of (thio)carboxylate ester, carboxylic anhydride residue, carboxylic halide residue, and primary/secondary amino or mercapto having a hydrolyzable group; when n4 is ≥ 2, A¹s may be of the same type or different types; A¹ may be a divalent group bonded to Si to form a ring structure; R²¹ is a C₁₋₂₀ monovalent aliphatic or cycloaliphatic hydrocarbon group or a C₆₋₁₈ monovalent aromatic hydrocarbon group; when n1 is ≥ 2, R²¹S may be of the same type or different types; R²³ is a C₁₋₂₀ monovalent aliphatic or cycloaliphatic hydrocarbon group or a C₆₋₁₈ monovalent aromatic hydrocarbon group or a halogen atom (fluorine, chlorine, bromine, iodine); when n3 is ≥ 2, R²³s may be of the same type or different types; R²² is a C₁₋₂₀ monovalent aliphatic or cycloaliphatic hydrocarbon group or a C₆₋₁₈ monovalent aromatic hydrocarbon group and may include nitrogen atom and/or silicon atom therein; when n2 is ≥ 2, R²²s may be of the same type or different types and form a ring together; R²⁴ is a C₁₋₂₀ divalent aliphatic or cycloaliphatic hydrocarbon group or a C₆₋₁₈ divalent aromatic hydrocarbon group; when n4 is ≥ 2, R²⁴s may be of the same type or different types; and trimethylsilyl group or tert-butyldimethylsilyl group is preferable and trimethylsilyl group is particularly preferable as the primary or secondary amino group having a hydrolyzable group or the mercapto group having a hydrolyzable group. In the present specification, a "C₁₋₂₀ monovalent aliphatic or cycloaliphatic hydrocarbon group" represents a "C₁₋₂₀ monovalent aliphatic hydrocarbon group or a C₃₋₂₀ monovalent cycloaliphatic hydrocarbon group". The same principle applies to the divalent hydrocarbon groups, as well.)

Further, the hydrocarbyloxysilane compound represented by general formula (IV) is preferably a hydrocarbyloxysilane compound represented by general formula (V) shown below.

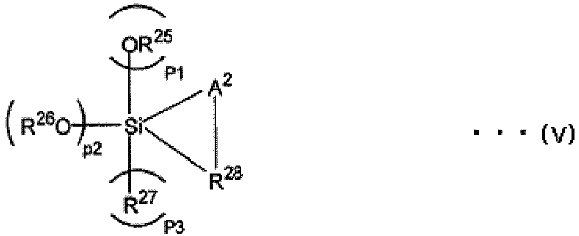

(In general formula (V), p1 + p2 + p3 = 2 (wherein p2 is an integer of 1 or 2 and p1 and p3 are each an integer of 0 or 1); A² is NRa (Ra is a monovalent hydrocarbon group, a hydrolyzable group, or a nitrogen-containing organic group, wherein the hydrolyzable group is preferably a trimethylsilyl or tert-butyldimethylsilyl group and particularly preferably trimethylsilyl group) or sulfur; R²⁵ is a C₁₋₂₀ monovalent aliphatic or cycloaliphatic hydrocarbon group or a C₆₋₁₈ monovalent aromatic hydrocarbon group; R²⁷ is a C₁₋₂₀ monovalent aliphatic or cycloaliphatic hydrocarbon group, or a C₆₋₁₈ monovalent aromatic hydrocarbon group, or a halogen atom (fluorine, chlorine, bromine, iodine); R²⁶ is a C₁₋₂₀ monovalent aliphatic or cycloaliphatic hydrocarbon group, or a C₆₋18 monovalent aromatic hydrocarbon group, or a nitrogen-containing organic group, wherein each of these groups may include nitrogen atom and/or silicon atom therein; R²⁶s may be of the same type or different types or together form a ring when P2 is 2; R²⁸ is a C₁₋₂₀ divalent aliphatic or cycloaliphatic hydrocarbon group or a C₆₋₁₈ divalent aromatic hydrocarbon group.

Yet further, the hydrocarbyloxysilane compound represented by general formula (IV) is preferably a hydrocarbyloxysilane compound represented by general formula (VI) or general formula (VII) shown below.

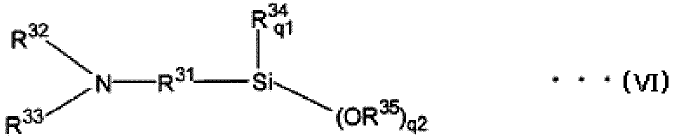

(In general formula (VI), q1 + q2 = 3 (wherein q1 is an integer in the range of 0 to 2 and q2 is an integer in the range of 1 to 3); R³¹ is a C₁₋₂₀ divalent aliphatic or cycloaliphatic hydrocarbon group or a C₆₋₁₈ divalent aromatic hydrocarbon group; R³² or R³³ each independently represent a hydrolyzable group, a C₁₋₂₀ monovalent aliphatic or cycloaliphatic hydrocarbon group, or a C₆₋₁₈ monovalent aromatic hydrocarbon group; R³⁴ is a C₁₋₂₀ monovalent aliphatic or cycloaliphatic hydrocarbon group or a C₆₋₁₈ monovalent aromatic hydrocarbon group; R³⁴s may be of the same type or different types when q1 is 2; R³⁵ is a C₁₋₂₀ monovalent aliphatic or cycloaliphatic hydrocarbon group or a C₆₋₁₈ monovalent aromatic hydrocarbon group; and R³⁵s may be of the same type or different types when q2 ≥ 2.

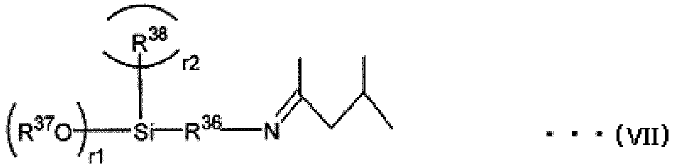

(In general formula (VII), r1 + r2 = 3 (wherein r1 is an integer in the range of 1 to 3 and r2 is an integer in the range of 0 to 2); R³⁶ is a C₁₋₂₀ divalent aliphatic or cycloaliphatic hydrocarbon group or a C₆₋₁₈ divalent aromatic hydrocarbon group; R³⁷ is a dimethylaminomethyl, dimethylaminoethyl, diethylaminomethyl, diethylaminoethyl, methylsilyl(methyl) aminomethyl, methylsilyl(methyl) aminoethyl, methylsilyl(ethyl) aminomethyl, methylsilyl(ethyl) aminoethyl, dimethylsilylaminomethyl, or dimethylsilylaminoethyl group, or a C₁₋₂₀ monovalent aliphatic or cycloaliphatic hydrocarbon group, or a C₆₋₁₈ monovalent aromatic hydrocarbon group; R³⁷s may be of the same type or different types when r1 ≥ 2; R³⁸ is a C₁₋₂₀ hydrocarbyloxy group, or a C₁₋₂₀ monovalent aliphatic or cycloaliphatic hydrocarbon group, or a C₆₋₁₈ monovalent aromatic hydrocarbon group; and R³⁸s may be of the same type or different types when r2 is 2.

Yet further, the hydrocarbyloxysilane compound represented by general formula (IV) preferably includes at least two nitrogen atoms represented by general formula (VIII) or general formula (IX) shown below.

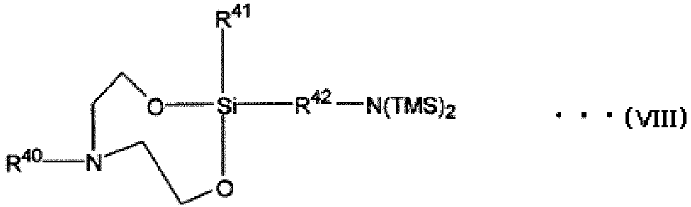

(In general formula (VIII), TMS represents a trimethylsilyl group; R⁴⁰ represents a trimethylsilyl group, or a C₁₋₂₀ monovalent aliphatic or cycloaliphatic hydrocarbon group, or a C₆₋₁₈ monovalent aromatic hydrocarbon group; R⁴¹ is a C₁₋₂₀ hydrocarbyloxy group, or a C₁₋₂₀ monovalent aliphatic or cycloaliphatic hydrocarbon group, or a C₆₋₁₈ monovalent aromatic hydrocarbon group; and R⁴² is a C₁₋₂₀ divalent aliphatic or cycloaliphatic hydrocarbon group, or a C₆₋₁₈ divalent aromatic hydrocarbon group.

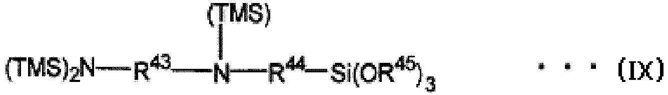

(In general formula (IX), TMS represents a trimethylsilyl group; R⁴³ and R⁴⁴ each independently represent a C₁₋₂₀ divalent aliphatic or cycloaliphatic hydrocarbon group, or a C₆₋₁₈ divalent aromatic hydrocarbon group; R⁴⁵ represents a C₁₋₂₀ monovalent aliphatic or cycloaliphatic hydrocarbon group or a C₆₋₁₈ monovalent aromatic hydrocarbon group; and a plurality of R⁴⁵s may be of the same type or different types.

Yet further, the hydrocarbyloxysilane compound represented by general formula (IV) is preferably a hydrocarbyloxysilane compound represented by general formula (X) shown below.

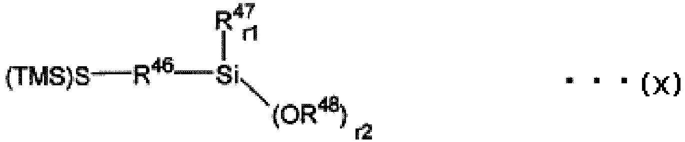

(In general formula (IX), r1 + r2 = 3 (wherein r1 is an integer in the range of 0 to 2 and r2 is an integer in the range of 1 to 3); TMS represents a trimethylsilyl group; R⁴⁶ represents a C₁₋₂₀ divalent aliphatic or cycloaliphatic hydrocarbon group, or a C₆₋₁₈ divalent aromatic hydrocarbon group; R⁴⁷ and R⁴⁸ each independently represent a C₁₋₂₀ monovalent aliphatic or cycloaliphatic hydrocarbon group or a C₆₋₁₈ monovalent aromatic hydrocarbon group; and a plurality of R⁴⁷s and a plurality of R⁴⁸s may be of the same type or different types, respectively.

Yet further, the hydrocarbyloxysilane compound represented by general formula (IV) is preferably a compound represented by general formula (XI) shown below.

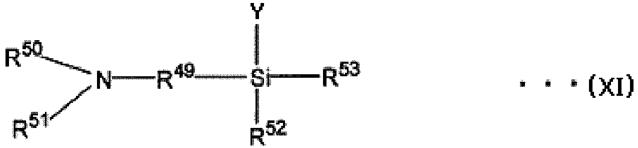

(In general formula (XI), Y represents a halogen atom; R⁴⁹ represents a C₁₋₂₀ divalent aliphatic or cycloaliphatic hydrocarbon group, or a C₆₋₁₈ divalent aromatic hydrocarbon group; R⁵⁰ and R⁵¹ each independently represent a hydrolyzable group, a C₁₋₂₀ monovalent aliphatic or cycloaliphatic hydrocarbon group, or a C₆₋₁₈ monovalent aromatic hydrocarbon group; alternatively, R⁵⁰ and R⁵¹ may be bonded to each other to form a divalent organic group; R⁵² and R⁵³ each independently represent a halogen atom, a hydrocarbyloxy group, C₁₋₂₀ monovalent aliphatic or cycloaliphatic hydrocarbon group, or a C₆₋₁₈ monovalent aromatic hydrocarbon group; and R⁵⁰ and R⁵¹ are preferably hydrolyzable groups (trimethylsilyl group or tert-butyldimethylsilyl group is preferable and trimethylsilyl group is particularly preferable as the hydrolyzable group).

The hydrocarbyloxysilane compound represented by general formulae (IV) to (XI) described above is preferably used in a case where the modified conjugated diene-based polymer is generated by anion polymerization.
Further, the hydrocarbyloxysilane compound represented by general formulae (IV) to (XI) is preferably an alkoxysilane compound.

Type of a modifying agent preferably used when the aforementioned diene-based polymer is modified by anion polymerization is not particularly restricted and can be selected in an appropriate manner according to the object of an application. Examples of the modifying agent include 3,4-bis(trimethylsilyloxy)-1-vinylbenzene, 3,4-bis(trimethylsilyloxy)benzaldehyde, 3,4-bis(tert-butyldimethylsilyloxy)benzaldehyde, 2-cyanopyridine, 1,3-dimethyl-2-imidazolidinone, 1-methyl-2-pyrrolidone, and the like. These modifying agents may be used either by one type solely or in combination of two or more types.

The hydrocarbyloxysilane compound is preferably an amide portion of a lithium amide compound used as a polymerization initiator in anion polymerization. Type of the lithium amide compound is not particularly restricted and may be appropriately selected according to the object of an application. Examples of the lithium amide compound include lithium hexamethyleneimide, lithium pyrrolidide, lithium piperidide, lithium heptamethyleneimide, lithium dodecamethyleneimide, lithium dimethylamide, lithium diethylamide, lithium dibutylamide, lithium dipropylamide, lithium diheptylamide, lithium dihexylamide, lithium dioctylamide, lithium di-2-ethylhexylamide, lithium didecylamide, lithium N-methylpiperazide, lithium ethylpropylamide, lithium ethylbutylamide, lithium ethylbenzylamide, lithium methylphenethylamide, and the like. A modifying agent which is to constitute an amide portion of lithium hexamethyleneimide, for example, is hexamethyleneimine. A modifying agent which is to constitute an amide portion of lithium pyrrolidide is pyrrolidine. A modifying agent which is to constitute an amide portion of lithium piperidide is piperidine. These modifying agents may be used either by one type solely or in combination of two or more types.

### -- Modified functional group containing oxygen atom --

Type of the modified functional group containing oxygen atom is not particularly restricted and may be appropriately selected according to the object of an application. Examples of the modified functional group containing oxygen atom include: an alkoxy group such as methoxy, ethoxy, n-propoxy, isopropoxy, n-butoxy, sec-butoxy, t-butoxy; an alkoxyalkyl group such as methoxymethyl, methoxyethyl, ethoxymethyl, ethoxyethyl; an alkoxyaryl group such as methoxyphenyl, ethoxyphenyl; an alkylene oxide group such as epoxy, tetrahydrofuranyl; a trialkylsilyloxy group such trimethylsilyloxy, triethylsilyloxy, t-butyldimethylsilyloxy; and the like. These functional groups may be used either by one type solely or in combination of two or more types.

### < Filler >

The filler includes at least silica and may optionally further include other components such as carbon black.

A content of the filler with respect to 100 parts by mass of the rubber component is not particularly restricted and may be appropriately selected according to the object of an application as long as it is within the range of 40-140 parts by mass. The content is preferably in the range of 60-120 parts by mass and more preferably in the range of 80-100 parts by mass with respect to 100 parts by mass of the rubber component.

The content of the filler with respect to 100 parts by mass of the rubber component ≥ 40 parts by mass can improve gripping performance of a tire and the same content ≤ 140 parts by mass can improve gripping performance on a dry road surface and wear resistance. Further, the same content within the aforementioned preferable or more preferable range is advantageous in terms of achieving gripping performance, while successfully keeping a good balance between rubber invasion into a road surface and hysteresis loss.

### << Silica >>

Type of silica is not particularly restricted and may be appropriately selected according to the object of an application. Examples of silica include wet silica (hydrated silica), dry silica (silica anhydride), calcium silicate, aluminum silicate, and the like. These examples of silica may be used either by one type solely or in combination of two or more types.

Finely divided wet silica and dry silica are preferable among these examples. Such wet silica in particular is advantageously employed in terms of significantly improving wear resistance, as well as gripping performance on a wet road surface.

The nitrogen absorption specific surface area (N₂SA) of the silica is not particularly restricted and may be appropriately selected according to the object of an application. The N₂SA of the silica is preferably in the range of 80 to 300 m²/g.

The N₂SA of the silica within the range of 80 to 300 m²/g is preferable because the N₂SA ≥ 80 m²/g ensures satisfactorily high reinforcing properties of the silica and the N₂SA ≤ 300 m²/g suppresses deterioration of workability. The nitrogen absorption specific surface area (N₂SA) represents a specific surface area measured according to the nitrogen absorption method described in JIS K 6430.

### -- Silica content ratio --

A "silica content ratio" represents a ratio of silica content in the filler in the present disclosure.

The silica content ratio is not particularly restricted and may be appropriately selected according to the object of an application. The silica content ratio in the filler is preferably in the range of 20-95 mass %, more preferably in the range of 20-50 mass % (inclusive of 20 mass % and exclusive of 50 mass %), and particularly preferably in the range of 35-50 mass % (inclusive of 35 mass % and exclusive of 50 mass %).

The silica content ratio in the filler in the range of 20-95 mass % is preferable because the silica content of ≥ 20 mass % ensures good improvement of wear resistance and the silica content of ≤ 95 mass % avoids suppressing improvement of wear resistance. The silica content ratio within the aforementioned more preferable or the particularly preferable range is advantageous in terms of achieving good gripping performance on a wet road surface and good gripping performance on a dry road surface of a tire in a well balanced, compatible manner.

### << Carbon black >>

Type of the carbon black is not particularly restricted and may be appropriately selected according to the object of an application. Examples of the carbon black include those classified as HAF, ISAF, SAF or the like according to the classification by ASTM (American Society for Testing and Materials). These examples of the carbon black may be used either by one type solely or in combination of two or more types.

ISAF and SAF are preferable among these examples in terms of improving reinforcing properties.

The nitrogen absorption specific surface area (N₂SA) of the carbon black is not particularly restricted and may be appropriately selected according to the object of an application. The N₂SA of the carbon black is preferably ≥ 70 m²/g.

The N₂SA of the carbon black ≥ 70 m²/g is advantageous in terms of satisfactorily improving wear resistance of the tire. The nitrogen absorption specific surface area (N₂SA) represents a nitrogen absorption specific surface area prescribed in JIS K 6217-2.

### - Carbon black content ratio -

A "carbon black content ratio" represents a ratio of carbon black content in the filler in the present disclosure.

The carbon black content ratio is not particularly restricted and may be appropriately selected according to the object of an application. The carbon black content ratio in the filler is preferably in the range of 50-80 mass % and more preferably in the range of 50-65 mass %.

The carbon black content ratio in the filler in the range of 50-80 mass % is preferable because the carbon black content of ≥ 50 mass % ensures good improvement of gripping performance on a dry road surface and the carbon black content of ≤ 80 mass % suppresses deterioration of gripping performance on a wet road surface. The carbon black content within the aforementioned more preferable is advantageous in terms of achieving good gripping performance on a wet road surface and good gripping performance on a dry road surface of a tire in a well balanced, compatible manner.

### <Low softening point resin>

Type of the low softening point resin is not particularly restricted and may be appropriately selected according to the object of an application as long as the softening point of the low softening point resin does not exceed 145 °C. Examples of the low softening point resin include natural resin, synthetic resin, and the like. These examples of the low softening point resin may be used either by one type solely or in combination of two or more types.

A content of the low softening point resin with respect to 100 parts by mass of the rubber component is not particularly restricted and may be appropriately selected according to the object of an application as long as the content is within 5 to 40 parts by mass. The content is preferably in the range of 20-30 parts by mass and more preferably in the range of 24-30 parts by mass with respect to 100 parts by mass of the rubber component. The content of the low softening point resin with respect to 100 parts by mass of the rubber component is preferably within 5 to 40 parts by mass because the content of ≥ 5 parts by mass can improve gripping performance on a dry road surface and gripping performance on a wet road surface of a tire and the same content of ≤ 40 parts by mass avoids suppressing improvement of gripping performance. Further, the same content of the low softening point resin within the aforementioned preferable or more preferable range is advantageous in terms of achieving good gripping performance and high wear resistance in a satisfactorily compatible manner.

### << Synthetic resin >>

Type of the synthetic resin is not particularly restricted and may be appropriately selected according to the object of an application. Examples of the synthetic resin include petroleum resin, phenolic resin, coal-based resin, xylene-based resin, and the like. These examples of the synthetic resin may be used either by one type solely or in combination of two or more types.

Petroleum resin is preferable among these examples in terms of readily and easily improving wear resistance and gripping performance of a tire.

### - Petroleum resin -

The petroleum resin can be obtained, for example, by: first obtaining, together with basic petrochemical products such as ethylene, propylene, butylene, and the like, a fraction containing unsaturated hydrocarbons such as olefins, diolefins, and the like, through thermal decomposition of naphtha in the petroleum refining process; and then subjecting the components of the fraction to a polymerizing process using a catalyst of the Friedel-Crafts reaction.

Type of the petroleum resin is not particularly restricted and may be appropriately selected according to the object of an application. Examples of the petroleum resin include: an aliphatic petroleum resin obtained, for example, by homopolymerization and/or copolymerization of a C5 fraction derived from thermal decomposition of naphtha; an aromatic petroleum resin obtained by homopolymerization and/or copolymerization of a C9 fraction derived from thermal decomposition of naphtha; a copolymerization-based petroleum resin obtained by copolymerization of the C5 fraction and the C9 fraction; a hydrogenated petroleum resin; a cycloaliphatic compound-based petroleum resin such as a dicyclopentadiene-based petroleum resin; and a styrene-based resin such as styrene, substituted styrene, a copolymer of styrene and another monomer, and the like. These examples of the petroleum resin may be used either by one type solely or in combination of two or more types.

A copolymerization-based petroleum resin, in particular, a copolymerization-based petroleum resin obtained by copolymerization of the C5 fraction and the C9 fraction derived from thermal decomposition of naphtha is preferable among these examples in terms of readily and easily improving wear resistance and gripping performance of a tire.

### -- C5 fraction --

Type of the aforementioned C5 fraction is not particularly restricted and may be appropriately selected according to the object of an application. Examples of the C5 fraction include: an olefinic hydrocarbon such as 1-pentene, 2-pentene, 2-methyl-1-butene, 2-methyl-2-butene, 3-methyl-1-butene; a diolefinic hydrocarbon such as 2-methyl-1,3-butadiene, 1,2-pentadiene, 1,3-pentadiene, 3-methyl-1,2-butadiene; and the like. These examples of the C5 fraction may be used either by one type solely or in combination of two or more types.

### -- C9 fraction --

Type of the aforementioned C9 fraction is not particularly restricted and may be appropriately selected according to the object of an application. Examples of the C9 fraction include: a styrene isomer such as α-methylstylene, β-methylstylene, γ-methylstylene; an indene analog such as indene, 1-benzofuran (coumarone); and the like. These examples of the C9 fraction may be used either by one type solely or in combination of two or more types.

### -- Phenolic resin --

Type of the aforementioned phenolic resin is not particularly restricted and may be appropriately selected according to the object of an application. Examples of the phenolic resin include: an alkylphenol-formaldehyde resin and a rosin-modified product thereof; an alkylphenol-acetylene resin; a modified alkylphenol resin; a terpenephenol resin; and the like. These examples of the phenolic resin may be used either by one type solely or in combination of two or more types.

### -- Coal-based resin --

Type of the aforementioned coal-based resin is not particularly restricted and may be appropriately selected according to the object of an application. Examples of the coal-based resin include coumarone indene resin and the like.

### -- Xylene-based resin --

Type of the aforementioned xylene-based resin is not particularly restricted and may be appropriately selected according to the object of an application. Examples of the xylene-based resin include xylene-formaldehyde resin and the like.

### << Natural resin >>

Type of the aforementioned natural resin is not particularly restricted and may be

appropriately selected according to the object of an application. Examples of the natural resin include a rosin-based resin, a terpene-based resin, and the like. These examples of the natural resin may be used either by one type solely or in combination of two or more types.

### -- Rosin-based resin --

Type of the aforementioned rosin-based resin is not particularly restricted and may be appropriately selected according to the object of an application. Examples of the rosin-based resin include gum rosin, tall oil rosin, wood rosin, hydrogenated rosin, disproportionated rosin, polymerized rosin, a rosin (ester) modified with glycerin, pentaerythritol, and the like. These examples of the rosin-based resin may be used either by one type solely or in combination of two or more types.

### -- Terpene-based resin --

Type of the aforementioned terpene-based resin is not particularly restricted and may be appropriately selected according to the object of an application. Examples of the terpene -based resin include α-pinene terpene resin, β-pinene terpene resin, dipentene terpene resin, aromatic modified terpene resin, terpene phenolic resin, hydrogenated terpene resin, and the like. These examples of the terpene-based resin may be used either by one type solely or in combination of two or more types.

Polymerized rosin, terpene phenolic resin, and hydrogenated terpene resin are preferable among the examples of the low softening point resin in terms of readily and easily obtaining high wear resistance and good gripping performance in a satisfactorily compatible manner.

### << Softening point >>

The softening point of the low softening point resin is not particularly restricted and may be appropriately selected according to the object of an application as long as the softening point of the low softening point resin does not exceed 145 °C. The softening point of the low softening point resin is preferably in the range of 45 °C to 120 °C.

In a case where the rubber composition contains the low softening point resin having the softening point ≤ 145 °C, the rubber composition softens and increases its viscosity at relatively low temperature, thereby exhibiting satisfactorily improved gripping performance on a dry road surface and a wet road surface, respectively. The low softening point resin having the softening point in the aforementioned preferable range is more advantageous because then the rubber composition exhibits good gripping performance in a further lower temperature range.

### < Other components >

The rubber composition for use in our tire may include additives conventionally used in the rubber industry, e.g. oil, vulcanizing agent, vulcanization accelerator, vulcanization accelerator aid, silane coupling agent, anti-oxidant, softening agent, and the like, in addition to a rubber component containing the aforementioned modified conjugated diene-based polymer, the filler and the low softening point resin in an appropriate manner unless addition thereof causes an adverse effect on the object of the present disclosure. Commercially available products may be used as these additives.

### << Oil >>

Type of the oil applicable to our tire is not particularly restricted and may be appropriately selected according to the object of an application. Examples of the oil include aromatic oil, naphthene-based oil, paraffin-based oil, ester-based oil, liquid conjugated diene rubber, liquid hydrogenated conjugated diene rubber, and the like. These examples of the oil may be used either by one type solely or in combination of two or more types.

Naphthene-based oil is preferable among these examples in terms of readily and easily improving wear resistance and gripping performance.

Addition of the oil to the rubber composition is preferable because it makes possible to control fluidity of the rubber composition, i.e. decrease viscosity and thus increase fluidity of the rubber composition prior to being vulcanized, so that the rubber composition can be extruded very smoothly.

A content of the oil with respect to 100 parts by mass of the rubber component is not particularly restricted and may be appropriately selected according to the object of an application. The content of the oil is preferably ≤ 50 parts by mass, more preferably in the range of 20 to 50 parts by mass, and further more preferably in the range of 30 to 50 parts by mass with respect to 100 parts by mass of the rubber component.

The content of the oil, of ≤ 50 parts by mass, with respect to 100 parts by mass of the rubber component is preferable because then good gripping performance and high wear resistance can be achieved in a compatible manner. In this regard, the content of the oil with respect to 100 parts by mass of the rubber component within the aforementioned more preferable or further more preferable range is advantageous because then it is possible to keep Mooney viscosity of the unvulcanized rubber at a satisfactory level and achieve good gripping performance on a dry road surface.

### << Vulcanizing agent >>

Type of the vulcanizing agent is not particularly restricted and may be appropriately selected according to the object of an application. Examples of the vulcanizing agent include: an organic peroxide such as benzoyl peroxide, dicumyl peroxide, di-t-butyl peroxide, t-butylcumyl peroxide, methylethylketone peroxide, cumenhydroperoxide, 2,5-dimethyl-2,5-di(t-butylperoxy)hexane; a sulfur-based vulcanizing agent such as sulfur, morpholine disulfide; and the like. These examples of the vulcanizing agent may be used either by one type solely or in combination of two or more types.

### << Vulcanization accelerator >>

Type of the vulcanization accelerator is not particularly restricted and may be appropriately selected according to the object of an application. Examples of the vulcanization accelerator include: a sulfenamide-based vulcanization accelerator such as CBS (N-cyclohexyl-2-benzothiazolesulfenamide), TBBS (N-t-butyl-2-benzothiazolesulfenamide), TBSI (N-t-butyl-2-benzothiazolesulfenimide); a guanidine-based vulcanization accelerator such as DPG (diphenylguanidine); a thiuram-based vulcanization accelerator such as tetraoctylthiuram disulfide, tetrabenzylthiuram disulfide; a vulcanization accelerator using zinc dialkyldithiophosphate; and the like. These examples of the vulcanization accelerator may be used either by one type solely or in combination of two or more types.

### << Vulcanization accelerator aid >>

Type of the vulcanization accelerator aid is not particularly restricted and may be appropriately selected according to the object of an application. Examples of the vulcanization accelerator aid include zinc white (ZnO), stearic acid, and the like. These examples of the vulcanization accelerator aid may be used either by one type solely or in combination of two or more types.

The rubber composition can be prepared by: blending a rubber component containing the modified conjugated diene-based polymer with the filler, the low softening point resin, and optionally the oil and other components; and subjecting the blend to mixing and kneading, warming, extrusion, and the like according to the methods known to the one skilled in the art.

### EXAMPLES

Our tire will be described further in detail by Examples hereinafter. Our tire, however, is not restricted by these Examples by any means and can be modified in an appropriate manner without departing from the scope and spirit thereof. In the description below, Examples 23 to 25 represent reference tires which are excluded from the claimed scope of the invention.

### [Examples 1 to 28, Comparative Examples 1 to 12]

### < Preparation of butadiene rubber (BR1)>

Product name "UBEPOL BR150L" manufactured by UBE INDUSTRIES, LTD. was used as butadiene rubber.

### < Synthesis of modified butadiene rubber (BR2) >

BR2 as a modified conjugated diene-based polymer (a polymer having an amino group at an terminal end thereof) was obtained by: preparing a cyclohexane solution by mixing 283 g of cyclohexane, 50 g of 1,3-butadiene, 0.0057 mmol of 2,2-ditetrahydrofurylpropane, and 0.513 mmol of hexamethyleneimine; pouring the cyclohexane solution as a reactant mixture to a dry pressure-resistant glass vessel (volume: 900 mL) under a nitrogen gas substituted condition; adding 0.57 mmol of n-butyllithium (n-BuLi) to the mixture, with stirring, to initiate a polymerization reaction; continuing stirring for 4.5 hours at 50 °C and, when the polymerization conversion rate reached approximately 100%, adding 0.5 ml of an isopropanol solution of 2,6-di-t-butylparacresol (BHT) (5%), to stop the polymerization reaction; and then collecting and drying a resulting product by the conventional method.

### < Synthesis of modified butadiene rubber (BR3) >

BR3 as a modified conjugated diene-based polymer (a polymer having an amino group and silicon at an terminal end thereof) was obtained by: preparing a cyclohexane solution as a reactant mixture by mixing 1.4 kg of cyclohexane, 250 g of 1,3-butadiene, and 0.0285 mmol of 2,2-ditetrahydrofurylpropane; pouring the cyclohexane solution to a nitrogen gas-substituted autoclave (5L) under a nitrogen gas substituted condition; adding 2.85 mmol of n-butyllithium (n-BuLi) to the mixture; allowing a polymerization reaction to proceed for 4.5 hours at 50 °C in a hot bath provided with a stirrer; extracting, when the polymerization conversion rate of 1,3-butadiene reached approximately 100%, the resulting polymer solution to a methanol solution containing 1.3 g of 2,6-di-tert-butyl-p-cresol, to stop the polymerization reaction; subjecting the solution mixture to steam stripping for solvent removal and then drying using rolls at 110 °C, to obtain polybutadiene; adding 1129 mg (3.364 mmol) of N,N-bis(trimethylsilyl)aminopropylmethyldiethoxysilane having a protected primary amino group to a solution of the polybutadiene thus obtained, in a state where the temperature of the solution was kept at 50 °C, without deactivating a polymerization catalyst; allowing a modifying reaction to proceed for 15 minutes; adding 2,6-di-tert-butyl-p-cresol to the polymer solution which had completed the modifying reaction; subjecting the solution to steam stripping for solvent removal and deprotection of the protected primary amino group; and drying a resulting rubber by using rolls heated at 110 °C.

### < Synthesis of modified butadiene rubber (BR4) >

### (1) Preparation of catalyst

A catalyst solution was prepared by: charging 7.11 g of a cyclohexane solution of butadiene (15.2 wt.%), 0.59 ml of a cyclohexane solution of neodymium neodecanoate (0.56M), 10.32 ml of a toluene solution of methylaluminoxane (MAO) or "PMAO" manufactured by Tosoh Akzo Corporation (3.23M as the Aluminum concentration), and 7.77 ml of a hexane solution of diisobutylaluminum hydride (0.90M) manufactured by Kanto Chemical Co., Inc. in this order to a dry glass vessel (volume: 100 ml) with a rubber stopper under a nitrogen gas substituted condition; aging the mixture for 2 minutes at the room temperature; and adding 1.45 ml of a hexane solution of diethylaluminum chloride (0.95M) manufactured by Kanto Chemical Co., Inc. to the mixture, and further maturing the mixture for 15 minutes at the room temperature with occasional stirring. The neodymium concentration in the catalyst solution thus obtained was 0.011 M (mol/l).

### (2) Production of intermediate polymer

Intermediate polymer was prepared by: charging a cyclohexane solution of dried and purified 1,3-butadiene, as well as dry cyclohexane, to a dry glass vessel (volume: approximately 900 ml) with a rubber stopper under a nitrogen gas substituted condition, so that 400 g of a cylohexane solution of 1,3-butadiene (12.5 mass %) was charged in the glass vessel; then charging 2.28 ml (neodymium: 0.025 mmol) of the catalyst solution prepared in (1) described above to the glass vessel and allowing a polymerization reaction to proceed for 1.0 hour in a hot bath at 50 °C. The microstructure of the intermediate polymer thus obtained had cis-1,4-bond content (95.5 %), trans- 1,4-bond content (3.9 %),and vinyl bond content (0.6 %). The microstructure of the intermediate polymer was determined by Fourier Transform Infrared Spectroscopy (FT-IR).

### (3) First modifying treatment

First modifying treatment was carried out by: preparing a hexane solution of 3-glycidoxypropyltrimethoxysilane (GPMOS) (1.0M) as a first modifying agent; adding the first modifying agent to the polymer solution obtained by (2) described above such that GPMOS was 23.5 mole equivalent to the neodymium content; and allowing a first modifying reaction to proceed at 50 °C for 60 minutes. (4) Second modifying treatment and other treatments subsequent thereto Second modifying treatment and other treatments subsequent thereto were then carried out by: adding 1.76 ml (corresponding to 70.5 eq/Nd) of a cyclohexane solution of tin bis(2-ethylhexanoate) (BEHAS) (1.01M) and 32 µl of ion exchange water (corresponding to 70.5 eq/Nd) as a condensation accelerator to the modified polymer solution obtained by (3) described above; allowing a second modifying reaction to proceed in a hot bath at 50 °C for 1.0 hour; then adding 2 ml of an isopropanol solution of 2,2-methylene-bis(4-ethyl-6-t-butylphenol) (NS-5) (5%) as anti-oxidant to the polymerization system, to stop the reaction; allowing the polymer to reprecipitate in isopropanol containing a small amount of NS-5; and drying the precipitate by a drum, to obtain a modified BR. The Mooney viscosity ML₁₊₄ (100 °C) of the modified BR thus obtained, measured by a RLM-01 type tester manufactured by Toyo Seiki Seisaku-Sho, Ltd. at 100 °C, was 93. The modified polymer had the same microstructure as the intermediate polymer.

### < Preparation of styrene-butadiene rubber (SBR1)>

Product name "TUFDENE 3835" (containing 37.5 parts by mass of oil with respect to 100 parts by mass of polymer) manufactured by Asahi Kasei Chemicals Corporation was used as styrene-butadiene rubber (SBR).

### < Measurement of softening point of low softening point resin >

The softening point of the low softening point resin was measured by the method according to JIS K-2207 6.4 "Softening point test method (Ring and ball method)".

### < Production of front tire >

Test tires having the sizes shown in Table 5 were manufactured by preparing the rubber compositions having the respective formulation ratios shown in Tables 1-4 and using the rubber compositions in treads thereof. Some of the test tires thus obtained were each assembled with a rim having a rim width of 3.50 inches and inflated at internal pressure of 250 kPa as front test tires.

### < Production of rear tire >

Some of the test tires having the size: 180/55ZR17 were each assembled with a rim having a rim width of 5.50 inches and inflated at internal pressure of 290 kPa as rear test tires.

Running performance was evaluated by: mounting front and rear test tires thus inflated on a large-sized motorcycle (with an engine displacement of 1000 cc) and carrying out the tests (1)-(3) described below. Rear test tires of the same type were unanimously used for the large-sized motorcycle rear tires of Examples 1-28 and Comparative Examples 1-12.

### < Evaluation of performance >

### (1) Gripping performance test on dry road surface

A test rider rode the motorcycle in various running manners on a dry test course for each Example and evaluated gripping performance of the tires during the running based on how he/she felt. The evaluation results are shown in Tables 1 to 4.

The evaluation results of Examples 1-22 and Comparative Examples 1-6 are each shown in Tables 1-3 as an index value calculated relative to the evaluation result of Example 1 being "6.0" out of the full score "10".

The evaluation results of Comparative Examples 7-9 are each shown in Table 4 as an index value calculated relative to the evaluation result of Comparative Example 7 being "6.0" out of the full score "10".

The evaluation results of Examples 23-25 are each shown in Table 4 as an index value calculated relative to the evaluation result of Example 23 being "6.0" out of the full score "10".

The evaluation results of Examples 26-28 are each shown in Table 4 as an index value calculated relative to the evaluation result of Example 26 being "6.0" out of the full score "10".

The evaluation results of Comparative Examples 10-12 are each shown in Table 4 as an index value calculated relative to the evaluation result of Comparative Example 10 being "6.0" out of the full score "10".

The larger index value represents the better gripping performance of the tire on a dry road surface.

### (2) Gripping performance test on wet road surface

A test rider rode the motorcycle in various running manners on a wet test course for each Example and evaluated gripping performance of the tires during the running based on how he/she felt. The evaluation results are shown in Tables 1 to 4.

The evaluation results of Examples 1-22 and Comparative Examples 1-6 are each shown in Tables 1-3 as an index value calculated relative to the evaluation result of Example 1 being "6.0" out of the full score "10".

The evaluation results of Comparative Examples 7-9 are each shown in Table 4 as an index value calculated relative to the evaluation result of Comparative Example 7 being "6.0" out of the full score "10".

The evaluation results of Examples 23-25 are each shown in Table 4 as an index value calculated relative to the evaluation result of Example 23 being "6.0" out of the full score "10".

The evaluation results of Examples 26-28 are each shown in Table 4 as an index value calculated relative to the evaluation result of Example 26 being "6.0" out of the full score "10".

The evaluation results of Comparative Examples 10-12 are each shown in Table 4 as an index value calculated relative to the evaluation result of Comparative Example 10 being "6.0" out of the full score "10".

The larger index value represents the better gripping performance of the tire on a wet road surface.

### (3) Wear resistance test

A test rider rode the motorcycle at 80 km/hour on a paved test course until the travel distance reached 3,500 km for each Example. Then, a remaining depth of a groove after the running was measured and wear resistance of the tire was evaluated based on the remaining depth of the groove. The evaluation results are shown in Tables 1 to 4.

The evaluation results of Examples 1-22 and Comparative Examples 1-6 are each shown in Tables 1-3 as an index value calculated relative to the evaluation result of Example 1 being "100".

The evaluation results of Comparative Examples 7-9 are each shown in Table 4 as an index value calculated relative to the evaluation result of Comparative Example 7 being "100".

The evaluation results of Examples 23-25 are each shown in Table 4 as an index value calculated relative to the evaluation result of Example 23 being "100".

The evaluation results of Examples 26-28 are each shown in Table 4 as an index value calculated relative to the evaluation result of Example 26 being "100".

The evaluation results of Comparative Examples 10-12 are each shown in Table 4 as an index value calculated relative to the evaluation result of Comparative Example 10 being "100".

The larger index value represents the higher wear resistance of the tire.

### (4) Evaluation criteria

With regard to Examples 1-22 and Comparative Examples 1-6 shown in Tables 1-3, the results thereof are evaluated according to a criterion that "whether or not the sum of the gripping performance index value on dry road surface and the gripping performance index value on wet road surface is ≥ 8 and the wear resistance index value ≥ 80". The evaluation result is regarded as satisfactory when it satisfies the aforementioned criterion. On the other hand, with regard to Comparative Examples 7-9 shown in Table 4, the results of gripping performance on dry road surface, gripping performance on wet road surface and wear resistance were evaluated, respectively, by comparing them with the relevant results of Comparative Example 7.

With regard to Examples 23-25 shown in Table 4, the results of gripping performance on dry road surface, gripping performance on wet road surface and wear resistance were evaluated, respectively, by comparing them with the relevant results of Example 23. With regard to Examples 26-28 shown in Table 4, the results of gripping performance on dry road surface, gripping performance on wet road surface and wear resistance were evaluated, respectively, by comparing them with the relevant results of Example 26. With regard to Comparative Examples 10-12 shown in Table 4, the results of gripping performance on dry road surface, gripping performance on wet road surface and wear resistance were evaluated, respectively, by comparing them with the relevant results of Comparative Example 10.

**[Table 1]**

| | | | | Comp. Ex. 1 | Example 1 | Example 2 | Example 3 | Example 4 | Example 5 | Example 6 | Example 7 |
|---|---|---|---|---|---|---|---|---|---|---|---|
| | Rubber component | Modified conjugated diene-based polymer | BR2 | | 15 | | | 40 | 60 | 80 | 100 |
| | | | BR3 | | | 15 | | | | | |
| | | | BR4 | | | | 15 | | | | |
| | | Other rubbers | BR1 * 1 | | | | | | | | |
| | | | SBR1 * 2 | 100 | 85 | 85 | 85 | 60 | 40 | 20 | |
| | Filler | Silica * 3 | | 40 | 40 | 40 | 40 | 40 | 40 | 40 | 40 |
| | | Carbon black * 4 | | 60 | 60 | 60 | 60 | 60 | 60 | 60 | 60 |
| | Coupling agent | Silane coupling agent * 5 | | 4 | 4 | 4 | 4 | 4 | 4 | 4 | 4 |
| | Low softening point resin | Natural resin (Softening point 110°C) | Resin 1 * 6 | 26 | 26 | 26 | 26 | 26 | 26 | 26 | 26 |
| | | Petroleum resin (Softening point 140°C) | Resin 2 * 7 | | | | | | | | |
| | | Synthetic resin (Softening point 143°C) | Resin 3 * 8 | | | | | | | | |
| | | Petroleum resin (Softening point 160°C) | Resin 4 * 9 | | | | | | | | |
| Front tire | Oil | Oil * 10 | | 10 | 16 | 16 | 16 | 25 | 33 | 40 | 48 |
| | Other components | Stearic acid | | 1.5 | 1.5 | 1.5 | 1.5 | 1.5 | 1.5 | 1.5 | 1.5 |
| | | Zinc oxide * 11 | | 2 | 2 | 2 | 2 | 2 | 2 | 2 | 2 |
| | | Anti-oxidant 6C * 12 | | 2 | 2 | 2 | 2 | 2 | 2 | 2 | 2 |
| | | Vulcanization accelerator (DPG) * 13 | | 3 | 3 | 3 | 3 | 3 | 3 | 3 | 3 |
| | | Vulcanization accelerator (CZ) * 14 | | 2 | 2 | 2 | 2 | 2 | 2 | 2 | 2 |
| | | Sulfur | | 1.8 | 1.8 | 1.8 | 1.8 | 1.8 | 1.8 | 1.8 | 1.8 |
| | Specific characteristics | Filler phr | | 100 | 100 | 100 | 100 | 100 | 100 | 100 | 100 |
| | | Silica ratio (mass %) | | 40 | 40 | 40 | 40 | 40 | 40 | 40 | 40 |
| | | Carbon black ratio (mass %) | | 60 | 60 | 60 | 60 | 60 | 60 | 60 | 60 |
| | | Low softening point resin phr | | 26 | 26 | 26 | 26 | 26 | 26 | 26 | 26 |
| | | Oil phr | | 37 | 39 | 39 | 39 | 41 | 44 | 45 | 48 |
| | Tire configuration | (L_{A}-L_{B})/X | | 0.335 | 0.335 | 0.335 | 0.335 | 0.335 | 0.335 | 0.335 | 0.335 |
| Evaluation of performance | | Gripping performance on dry road surface | | 6.5 | 6 | 6 | 5 | 4.5 | 4 | 4 | 3.5 |
| | | Gripping performance on wet road surface | | 5.5 | 6 | 6 | 6 | 5.5 | 5 | 5 | 5 |
| | | Sum of gripping performance index value on dry road surface and gripping performance index value on wet road surface | | 12 | 12 | 12 | 11 | 10 | 9 | 9 | 8.5 |
| | | Wear resistance (index) | | 70 | 100 | 100 | 100 | 110 | 110 | 115 | 120 |

**[Table 2]**

| | | | | Comp. Ex. 2 | Example 8 | Example 9 | Comp. Ex. 3 | Example 10 | Example 11 | Example 12 | Example 13 | Example 14 | Example 15 |
|---|---|---|---|---|---|---|---|---|---|---|---|---|---|
| | Rubber component | Modified conjugated diene-based polymer | BR2 | 15 | 15 | 15 | 15 | 15 | 15 | 15 | 15 | 15 | 15 |
| | | | BR3 | | | | | | | | | | |
| | | | BR4 | | | | | | | | | | |
| | | Other rubbers | BR1 * 1 | | | | | | | | | | |
| | | | SBR1 * 2 | 85 | 85 | 85 | 85 | 85 | 85 | 85 | 85 | 85 | 85 |
| | Filler | Silica * 3 | | 8 | 16 | 56 | 80 | 10 | 20 | 48 | 70 | 95 | 100 |
| | | Carbon black * 4 | | 12 | 24 | 84 | 120 | 90 | 80 | 52 | 30 | 5 | |
| | Coupling agent | Silane coupling agent * 5 | | 0.8 | 1.6 | 5.6 | 8 | 1 | 2 | 4.8 | 7 | 9.5 | 10 |
| | Low softening point resin | Natural resin (Softening point 110°C) | Resin 1 * 6 | 26 | 26 | 26 | 26 | 26 | 26 | 26 | 26 | 26 | 26 |
| | | Petroleum resin (Softening point 140°C) | Resin 2 * 7 | | | | | | | | | | |
| | | Synthetic resin (Softening point 143°C) | Resin 3 * 8 | | | | | | | | | | |
| | | Petroleum resin (Softening point 160°C) | Resin 4 * 9 | | | | | | | | | | |
| Front tire | Oil | Oil * 10 | | 16 | 16 | 16 | 16 | 16 | 16 | 16 | 16 | 16 | 16 |
| | Other components | Stearic acid | | 1.5 | 1.5 | 1.5 | 1.5 | 1.5 | 1.5 | 1.5 | 1.5 | 1.5 | 1.5 |
| | | Zinc oxide * 11 | | 2 | 2 | 2 | 2 | 2 | 2 | 2 | 2 | 2 | 2 |
| | | Anti-oxidant 6C * 12 | | 2 | 2 | 2 | 2 | 2 | 2 | 2 | 2 | 2 | 2 |
| | | Vulcanization accelerator (DPG) * 13 | | 3 | 3 | 3 | 3 | 3 | 3 | 3 | 3 | 3 | 3 |
| | | Vulcanization accelerator (CZ) * 14 | | 2 | 2 | 2 | 2 | 2 | 2 | 2 | 2 | 2 | 2 |
| | | Sulfur | | 1.8 | 1.8 | 1.8 | 1.8 | 1.8 | 1.8 | 1.8 | 1.8 | 1.8 | 1.8 |
| | Specific characteristics | Filler phr | | 20 | 40 | 140 | 200 | 100 | 100 | 100 | 100 | 100 | 100 |
| | | Silica ratio (mass %) | | 40 | 40 | 40 | 40 | 10 | 20 | 48 | 70 | 95 | 100 |
| | | Carbon black ratio (mass %) | | 60 | 60 | 60 | 60 | 90 | 80 | 52 | 30 | 5 | 0 |
| | | Low softening point resin phr | | 26 | 26 | 26 | 26 | 26 | 26 | 26 | 26 | 26 | 26 |
| | | Oil phr | | 39 | 39 | 39 | 39 | 39 | 39 | 39 | 39 | 39 | 39 |
| | Tire configuration | (L_{A}-L_{B})/X | | 0.335 | 0.335 | 0.335 | 0.335 | 0.335 | 0.335 | 0.335 | 0.335 | 0.335 | 0.335 |
| Evaluation of performance | | Gripping performance on dry road surface | | 2 | 4.5 | 5 | 3 | 7 | 6.5 | 5.7 | 5 | 4 | 3.5 |
| | | Gripping performance on wet road surface | | 2 | 4.5 | 5 | 3 | 5 | 5.5 | 6.3 | 7 | 7 | 7 |
| | | Sum of gripping performance index value on dry road surface and gripping performance index value on wet road surface | | 4 | 9 | 10 | 6 | 12 | 12 | 12 | 12 | 11 | 10.5 |
| | | Wear resistance (index) | | 60 | 85 | 85 | 65 | 105 | 100 | 100 | 95 | 90 | 80 |

**[Table 3]**

| | | | | Example 16 | Example 17 | Comp. Ex. 4 | Comp. Ex. 5 | Example 18 | Example 19 | Comp. Ex. 6 | Example 20 | Example 21 | Example 22 |
|---|---|---|---|---|---|---|---|---|---|---|---|---|---|
| | Rubber component | Modified conjugated diene-based polymer | BR2 | 15 | 15 | 15 | 15 | 15 | 15 | 15 | 15 | 15 | 15 |
| | | | BR3 | | | | | | | | | | |
| | | | BR4 | | | | | | | | | | |
| | | Other rubbers | BR1 * 1 | | | | | | | | | | |
| | | | SBR1 * 2 | 85 | 85 | 85 | 85 | 85 | 85 | 85 | 85 | 85 | 85 |
| | Filler | Silica * 3 | | 40 | 40 | 40 | 40 | 40 | 40 | 40 | 40 | 40 | 40 |
| | | Carbon black * 4 | | 60 | 60 | 60 | 60 | 60 | 60 | 60 | 60 | 60 | 60 |
| | Coupling agent | Silane coupling agent * 5 | | 4 | 4 | 4 | 4 | 4 | 4 | 4 | 4 | 4 | 4 |
| | Low softening point resin | Natural resin (Softening point 110°C) | Resin 1 * 6 | | | | | 5 | 40 | 60 | 26 | 26 | 26 |
| | | Petroleum resin (Softening point 140°C) | Resin 2 * 7 | 26 | | | | | | | | | |
| | | Synthetic resin (Softening point 143°C) | Resin 3 * 8 | | 26 | | | | | | | | |
| | | Petroleum resin (Softening point 160°C) | Resin 4 * 9 | | | 26 | | | | | | | |
| Front tire | Oil | Oil * 10 | | 16 | 16 | 16 | 16 | 16 | 16 | 16 | 16 | 20 | 24 |
| | Other components | Stearic acid | | 1.5 | 1.5 | 1.5 | 1.5 | 1.5 | 1.5 | 1.5 | 1.5 | 1.5 | 1.5 |
| | | Zinc oxide * 11 | | 2 | 2 | 2 | 2 | 2 | 2 | 2 | 2 | 2 | 2 |
| | | Anti-oxidant 6C * 12 | | 2 | 2 | 2 | 2 | 2 | 2 | 2 | 2 | 2 | 2 |
| | | Vulcanization accelerator (DPG) * 13 | | 3 | 3 | 3 | 3 | 3 | 3 | 3 | 3 | 3 | 3 |
| | | Vulcanization accelerator (CZ) * 14 | | 2 | 2 | 2 | 2 | 2 | 2 | 2 | 2 | 2 | 2 |
| | | Sulfur | | 1.8 | 1.8 | 1.8 | 1.8 | 1.8 | 1.8 | 1.8 | 1.8 | 1.8 | 1.8 |
| | Specific characteristics | Filler phr | | 100 | 100 | 100 | 100 | 100 | 100 | 100 | 100 | 100 | 100 |
| | | Silica ratio (mass %) | | 40 | 40 | 40 | 40 | 40 | 40 | 40 | 40 | 40 | 40 |
| | | Carbon black ratio (mass %) | | 60 | 60 | 60 | 60 | 60 | 60 | 60 | 60 | 60 | 60 |
| | | Low softening point resin phr | | 26 | 26 | 26 | 0 | 5 | 40 | 60 | 26 | 26 | 26 |
| | | Oil phr | | 39 | 39 | 39 | 39 | 39 | 39 | 39 | 39 | 43 | 47 |
| | Tire configuration (L_{A}-L_{B}) /X | | | 0.335 | 0.335 | 0.335 | 0.335 | 0.335 | 0.335 | 0.335 | 0.335 | 0.335 | 0.335 |
| Evaluation of performance | | Gripping performance on dry road surface | | 6.5 | 6.7 | 6.8 | 3.5 | 4.5 | 6.5 | 7 | 5 | 5.8 | 6.5 |
| | | Gripping performance on wet road surface | | 5.5 | 5.3 | 5.2 | 4 | 5 | 6 | 6.5 | 4.5 | 6.2 | 7 |
| | | Sum of gripping performance index value on dry road surface and gripping performance index value on wet road surface | | 12 | 12 | 12 | 7.5 | 9.5 | 12.5 | 13.5 | 9.5 | 12 | 13.5 |
| | | Wear resistance (index) | | 90 | 85 | 75 | 110 | 100 | 105 | 75 | 100 | 100 | 85 |

**[Table 4]**

| | | | | Comp. Ex. 7 | Comp. Ex. 8 | Comp. Ex. 9 | Example 23 | Example 24 | Example 25 | Example 26 | Example 27 | Example 28 | Comp. Ex. 10 | Comp. Ex. 11 | Comp. Ex. 12 |
|---|---|---|---|---|---|---|---|---|---|---|---|---|---|---|---|
| | Rubber component | Modified conjugated diene-based polymer | BR2 | 15 | 15 | 15 | 15 | 15 | 15 | 15 | 15 | 15 | 15 | 15 | 15 |
| | | | BR3 | | | | | | | | | | | | |
| | | | BR4 | | | | | | | | | | | | |
| | | Other rubbers | BR1 * 1 | | | | | | | | | | | | |
| | | | SBR1 * 2 | 85 | 85 | 85 | 85 | 85 | 85 | 85 | 85 | 85 | 85 | 85 | 85 |
| | Filler | Silica * 3 | | 40 | 20 | 40 | 40 | 20 | 40 | 40 | 20 | 40 | 40 | 20 | 40 |
| | | Carbon black * 4 | | 60 | 80 | 60 | 60 | 80 | 60 | 60 | 80 | 60 | 60 | 80 | 60 |
| | Coupling agent | Silane coupling agent * 5 | | 4 | 2 | 4 | 4 | 2 | 4 | 4 | 2 | 4 | 4 | 2 | 4 |
| | Low softening point resin | Natural resin (Softening point 110°C) | Resin 1 * 6 | 26 | 26 | 40 | 26 | 26 | 40 | 26 | 26 | 40 | 26 | 26 | 40 |
| | | Petroleum resin (Softening point 140°C) | Resin 2 * 7 | | | | | | | | | | | | |
| | | Synthetic resin (Softening point 143°C) | Resin 3 * 8 | | | | | | | | | | | | |
| | | Petroleum resin (Softening point 160°C) | Resin 4 * 9 | | | | | | | | | | | | |
| Front tire | Oil | Oil * 10 | | 16 | 16 | 16 | 16 | 16 | 16 | 16 | 16 | 16 | 16 | 16 | 16 |
| | Other components | Stearic acid | | 1.5 | 1.5 | 1.5 | 1.5 | 1.5 | 1.5 | 1.5 | 1.5 | 1.5 | 1.5 | 1.5 | 1.5 |
| | | Zinc oxide * 11 | | 2 | 2 | 2 | 2 | 2 | 2 | 2 | 2 | 2 | 2 | 2 | 2 |
| | | Anti-oxidant 6C * 12 | | 2 | 2 | 2 | 2 | 2 | 2 | 2 | 2 | 2 | 2 | 2 | 2 |
| | | Vulcanization accelerator (DPG) * 13 | | 3 | 3 | 3 | 3 | 3 | 3 | 3 | 3 | 3 | 3 | 3 | 3 |
| | | Vulcanization accelerator (CZ) * 14 | | 2 | 2 | 2 | 2 | 2 | 2 | 2 | 2 | 2 | 2 | 2 | 2 |
| | | Sulfur | | 1.8 | 1.8 | 1.8 | 1.8 | 1.8 | 1.8 | 1.8 | 1.8 | 1.8 | 1.8 | 1.8 | 1.8 |
| | Specific characteristics | Filler phr | | 100 | 100 | 100 | 100 | 100 | 100 | 100 | 100 | 100 | 100 | 100 | 100 |
| | | Silica ratio (mass %) | | 40 | 20 | 40 | 40 | 20 | 40 | 40 | 20 | 40 | 40 | 20 | 40 |
| | | Carbon black ratio (mass %) | | 60 | 80 | 60 | 60 | 80 | 60 | 60 | 80 | 60 | 60 | 80 | 60 |
| | | Low softening point resin phr | | 26 | 26 | 40 | 26 | 26 | 26 | 26 | 26 | 26 | 26 | 26 | 26 |
| | | Oil phr | | 39 | 39 | 39 | 39 | 39 | 39 | 39 | 39 | 39 | 39 | 39 | 39 |
| | Tiᵣₑ configuration | \|(L_{J}>⁻L_{B})/X | | 0.258 | 0.258 | 0.258 | 0.290 | 0.290 | 0.290 | 0.347 | 0.347 | 0.347 | 0.371 | 0.371 | 0.371 |
| Evaluation of performance | | Gripping performance on dry road surface | | 6 | 6.5 | 6.5 | 6 | 6.5 | 6.5 | 6 | 6.5 | 6.5 | 6 | 6.5 | 6.5 |
| | | Gripping performance on wet road surface | | 6 | 5.5 | 6 | 6 | 5.5 | 6 | 6 | 5.5 | 6 | 6 | 5.5 | 6 |
| | | Wear resistance (index) | | 100 | 85 | 80 | 100 | 0 | 105 | 100 | 110 | 115 | 100 | 90 | 80 |

| | | | | | | | | | | | | | | | |
|---|---|---|---|---|---|---|---|---|---|---|---|---|---|---|---|
| *1 (BR1): Model number/Product name "UBEPOL BR150L" manufactured by UBE INDUSTRIES, LTD. *2 (SBR1): Model number/Product name "TUFDENE 3835" (containing 37.5 parts by mass of oil with respect to 100 parts by mass of polymer. The values relevant to SBR1 in Tables 1-4 represent "parts by mass" values of polymer) manufactured by Asahi Kasei Chemicals Corporation *3 (silica): Model number/Product name "Nipsil AQ" manufactured by Tosoh Silica Corporation *4 (carbon black): Model number/Product name "ASAHI #105" manufactured by Asahi Carbon Co., Ltd. *5 (silane coupling agent): Model number/Product name "ABC-856" manufactured by Shin-Etsu Chemical Co., Ltd. *6 (Resin 1): Model number/Product name "Hairojin S" manufactured by (IREX) Taisha pine essential oil Co., Ltd. *7 (Resin 2): Model number/Product name "Nisseki Neopolymer 140" manufactured by JX Nippon Oil & Energy Corporation *8 (Resin 3): Model number/Product name "KORESIN" manufactured by BASF SE *9 (Resin 4): Model number/Product name "Nisseki Neopolymer 170S" manufactured by JX Nippon Oil & Energy Corporation *10 (oil): Model number/Product name "A/O MIX" manufactured by JX Nippon Oil & Energy Corporation (The values relevant to "Oil" in Tables 1-4 represent the sum of the "parts by mass" value of this oil and the "parts by mass" value of oil extension in the polymer.) *11 (zinc oxide): Two types of zinc oxide manufactured by HakusuiTech Co., Ltd. *12 (anti-oxidant 6C): Model number/Product name "Antigen 6C" manufactured by Sumitomo Chemical Co., Ltd. *13 (vulcanization accelerator (DPG)): Model number/Product name "SOXINOL D" manufactured by Sumitomo Chemical Co., Ltd. *14 (vulcanization accelerator (CZ)): Model number/Product name "Noccelar CZ-G" manufactured by Ouchi Shinko Chemical Industrial Co., Ltd. | | | | | | | | | | | | | | | |

**[Table 5]**

| Examples, Comparative Examples | Tire size | (L_{A} - L_{B})/X |
|---|---|---|
| Examples 1-22, Comparative Examples 1-6 | 110/70ZR12 | 0.335 |
| Comparative Examples 7-9 | 180/55ZR17 | 0.258 |
| Examples 23-25 | 200/50 | 0.290 |
| Examples 26-28 | 130/70ZR16 | 0.347 |
| Comparative Examples 10-12 | 130/70ZR16 | 0.371 |

It has been revealed by comparison of Examples 1-3 with Comparative Example 1 that inclusion of the modified conjugated diene-based polymer in the rubber component is essentially required in order to obtain a superior effect of our tire. Further, it has been revealed by comparison of Examples 1, 8, 9 with Comparative Examples 2, 3 that inclusion of a silica-containing filler by 40-140 parts by mass in the rubber composition is essentially required in order to obtain a superior effect of our tire. Yet further, it has been revealed by comparison of Examples 1, 16, 17 with Comparative Example 4 that inclusion of the low softening point resin having softening point not higher than 145 °C in the rubber composition is essentially required in order to obtain a superior effect of our tire.
Yet further, it has been revealed by comparison of Examples 1, 18, 19 with Comparative Examples 5, 6 that inclusion of the low softening point resin having softening point not higher than 145 °C by the content of 5-40 parts by mass with respect to 100 parts by mass of the rubber component is essentially required in order to obtain a superior effect of our tire.
Yet further, it has been revealed by comparison of Examples 1, 23-28 with Comparative Examples 7-12 that (L_{A} - L_{B})/X must be in the range of 0.277 to 0.350 in order to obtain a superior effect of our tire.
Yet further, it has been revealed that by comparison between Examples 1, 4-7 that the larger content of the modified conjugated diene-based polymer results in the higher sear resistance of the tire.
Yet further, it has been revealed that by comparison between Examples 10-15 that setting a silica content ratio in the filler to be in the range of 20-95 mass % enables good gripping performance and high wear resistance to be achieved in a compatible manner. Yet further, it has been revealed that by comparison between Examples 1, 20-22 that inclusion of oil in the rubber composition by the content of 50 parts by mass or less with respect to 100 parts by mass of the rubber component achieves good gripping performance of the tire.
With regard to Comparative Examples 7-12 and Examples 23-28, tire performances were evaluated for four different types of tire configuration, i.e. (L_{A} - L_{B})/X = 0.258, (L_{A} - L_{B})/X = 0.290, (L_{A} - L_{B})/X = 0.347, and (L_{A} - L_{B})/X = 0.371, respectively, by changing a formulation of the rubber composition in three different manners (i.e. formulation A, formulation B, formulation C) in each type of the tire configurations. In the cases of the test tires having (L_{A} - L_{B})/X values beyond the range of 0.277-0.350 (Comparative Examples 7-9 and Comparative Examples 10-12), those having formulation B and formulation C each exhibited a significant drop of wear resistance, although gripping performance on a dry road surface thereof made some improvement. In contrast, in the cases of the test tires having (L_{A} - L_{B})/X values within the range of 0.277-0.350 (Examples 23-25 and Examples 26-28), they basically achieved good gripping performance on a dry road surface and high wear resistance in a compatible manner. Accordingly, it has been proved that the feature that (L_{A} - L_{B})/X is in the range of 0.277-0.350 is essentially required in order to obtain a superior effect of our tire. In this regard, the test tires having (L_{A} - L_{B})/X values within the range of 0.300-0.350 (Examples 27, 28) achieved good gripping performance and high wear resistance of treads in a more compatible manner than the Example test tires having (L_{A} - L_{B})/X values beyond the range of 0.300-0.350 (Examples 24, 25).

### INDUSTRIAL APPLICABILITY

Our tire is preferably applicable in particular to a tire for a motorcycle such as a racing motorcycle, an on-highway motorcycle, an on-road motorcycle, and an off-road motorcycle.

### REFERENCE SIGNS LIST

- 1: Tire
- 2: Tread portion
- 3: Sidewall portion
- 4: Bead portion
- 5: Rim
- 6: Carcass
- 7: Rotation center of tire
- 8: Tread

## Claims

1. A tire (1) having a tread (2), wherein:
provided that the center position in the tire width direction of a tread surface is the center position A, a position distanced from the center position A on each side in the tire width direction along a periphery of the tread surface by 1/4 of the entire peripheral length of the tread surface is position B, a length of a straight line l_{A} drawn from the center position A to be normal to the tire rotation axis P is L_{A}, a length of a straight line drawn from the position B to be normal to the tire rotation axis P is L_{B}, an intersection of the straight line l_{A} and a straight line drawn from the position B to be normal to the straight line l_{A} is position C, and a length between the position B and the position C is X, (L_{A} - L_{B})/X is in the range of 0.325 to 0.350; and
the tread is obtained by using a rubber composition containing 40-140 parts by mass of a filler including silica and 5-40 parts by mass of a low softening point resin having softening point not higher than 145 °C with respect to 100 parts by mass of a rubber component including a modified conjugated diene-based polymer; and
the softening point of the low softening point resin is measured by a method according to JIS K-2207 6.4 "Softening point test method (Ring and ball method)".

2. The tire (1) of claim 1, wherein a silica content ratio in the filler is in the range of 20-95 mass %.

3. The tire (1) of claim 2, wherein the silica content ratio in the filler is in the range of 20-50 mass %, the range being inclusive of 20 mass % and exclusive of 50 mass %.

4. The tire (1) of any of claims 1 to 3, wherein the filler contains carbon black and a carbon black content ratio in the filler is in the range of 50-80 mass %, the range being inclusive of 50 mass % and 80 mass %.

5. The tire (1) of any of claims 1 to 4, wherein a modified functional group of the modified conjugated diene-based polymer includes at least one type of atom selected from the group consisting of nitrogen atom, silicon atom and oxygen atom.

6. The tire (1) of any of claims 1 to 5, wherein the tire (1) is a tire for a motorcycle.

7. The tire (1) of claim 1, wherein the silica content ratio in the filler is in the range of 20-50 mass%, the range being inclusive of 20 mass% and exclusive of 50 mass%.

## Patentansprüche

1. Reifen (1), welcher eine Lauffläche (2) hat, bei welchem:
vorausgesetzt, dass die Mittenposition in der Reifenbreitenrichtung einer Laufflächenoberfläche die Mittenposition A ist, eine von der Mittenposition A auf beiden Seiten in der Reifenbreitenrichtung entlang eines Umfangs der Laufflächenoberfläche um 1/4 der gesamten Umfangslänge der Laufflächenoberfläche entfernte Position Position B ist, eine Länge einer geraden Linie l_{A}, welche von der Mittenposition A in normaler Richtung zur Reifendrehachse P gezogen wird, L_{A} ist, eine Länge einer geraden Linie, welche von der Position B in normaler Richtung zur Reifendrehachse P gezogen wird, L_{B} ist, ein Schnittpunkt der geraden Linie l_{A} und einer geraden Linie, welche von der Position B in normaler Richtung zur geraden Linie l_{A} gezogen wird, Position C ist, und eine Länge zwischen der Position B und der Position C X ist, das Verhältnis (L_{A} - L_{B})/X in dem Bereich von 0,325 bis 0,350 liegt; und
die Lauffläche erzielt wird, indem eine Kautschukzusammensetzung verwendet wird, welche 40 bis 140 Gewichtsanteile eines Füllers, welcher Silika enthält, und 5 bis 40 Gewichtsanteile eines Harzes mit niedrigem Erweichungspunkt nicht über 145 °C in Bezug auf 100 Gewichtsanteile einer Kautschukkomponente, welche ein modifiziertes, konjugiertes, dienbasiertes Polymer enthält, enthält; und
der Erweichungspunkt des Harzes mit niedrigem Erweichungspunkt anhand einer Methode nach der Norm JIS K-2207 6.4 "Erweichungspunkt-Prüfung (Verfahren mit Ring und Kugel)" gemessen wird.

2. Reifen (1) nach Anspruch 1, bei welchem ein Silikagehaltsverhältnis im Füller in dem Bereich von 20 bis 95 Gewichtsprozent liegt.

3. Reifen (1) nach Anspruch 2, bei welchem das Silikagehaltsverhältnis im Füller in dem Bereich von 20 bis 50 Gewichtsprozent liegt, wobei der Bereich 20 Gewichtsprozent einschließt und 50 Gewichtsprozent ausschließt.

4. Reifen (1) nach einem der Ansprüche 1 bis 3, bei welchem der Füller Ruß enthält und ein Rußgehaltsverhältnis im Füller in dem Bereich von 50 bis 80 Gewichtsprozent liegt, wobei der Bereich 50 Gewichtsprozent und 80 Gewichtsprozent einschließt.

5. Reifen (1) nach einem der Ansprüche 1 bis 4, bei welchem eine modifizierte Funktionsgruppe des modifizierten, konjugierten, dienbasierten Polymers mindestens eine Art von Atom enthält, gewählt aus der Gruppe, bestehend aus Stickstoffatom, Siliziumatom und Sauerstoffatom.

6. Reifen (1) nach einem der Ansprüche 1 bis 5, bei welchem der Reifen (1) ein Reifen für ein Motorrad ist.

7. Reifen (1) nach Anspruch 1, bei welchem das Silikagehaltsverhältnis im Füller in dem Bereich von 20 bis 50 Gewichtsprozent liegt, wobei der Bereich 20 Gewichtsprozent einschließt und 50 Gewichtsprozent ausschließt.

## Revendications

1. Pneu (1) doté d'une bande de roulement (2), dans lequel :
étant entendu que la position centrale dans le sens de la largeur du pneu d'une surface de bande de roulement est la position centrale A, et qu'une position distante de la position centrale A de chaque côté dans le sens de largeur du pneu, le long d'une périphérie de la surface de bande de roulement, de ¼ de la longueur périphérique entière est la position B, la longueur d'une droite 1A tracée de la position centrale A et perpendiculaire à l'axe de rotation du pneu P étant L_{A}, la longueur d'une droite tracée de la position B et perpendiculaire à l'axe de rotation du pneu P étant L_{B}, et l'intersection de la droite l_{A} et de la droite tracée de la position B et perpendiculaire à la droite l_{A} étant la position C, la longueur entre la position B et la position C est égale à X où (L_{A} - L_{B})/X est compris entre 0,325 et 0,350, et
la bande de roulement est obtenue en utilisant une composition de caoutchouc contenant 40 à 140 parties en poids d'une matière de charge incluant de la silice et 5 à 40 parties en poids d'une résine à bas point de ramollissement qui n'est pas supérieur à 145 °C rapportées à 100 parties en poids d'un composant de caoutchouc comprenant un polymère à base de diène conjugué modifié, et
le point de ramollissement de la résine à bas point de ramollissement est mesurée par une méthode selon la norme JIS K-2207 6.4 « Méthode de détermination de point de ramollissement (méthode bille et anneau) ».

2. Pneu (1) selon la revendication 1, dans lequel le rapport de teneur en silice dans la matière de charge est de 20 à 95 % en poids.

3. Pneu (1) selon la revendication 2, dans lequel le rapport de teneur en silice dans la matière de charge est de 20 à 50 % en poids, les 20 % en poids étant inclus et les 50 % en poids étant exclus.

4. Pneu (1) selon l'une des revendications 1 à 3, dans lequel la matière de charge contient du noir de carbone et le rapport de teneur de noir de carbone dans la matière de charge est de 50 à 80 % en poids, les 50 % en poids et les 80 % en poids étant inclus.

5. Pneu (1) selon l'une des revendications 1 à 4, dans lequel un groupe fonctionnel modifié du polymère à base de diène conjugué modifié comprend au moins un type d'atome sélectionné parmi le groupe comprenant un atome d'azote, un atome de silicium et un atome d'oxygène.

6. Pneu (1) selon l'une des revendications 1 à 5, dans lequel le pneu (1) est un pneu pour motocyclette.

7. Pneu (1) selon la revendication 1, dans lequel le rapport de teneur en silice dans la matière de charge est de 20 à 50 % en poids, les 20 % en poids étant inclus et les 50 % en poids étant exclus.
